# EUROPEAN PATENT APPLICATION

(11) **EP 1 637 277 A1**
(43) Date of publication of application: **22.03.2006**
(21) Application number: 04405589.5
(22) Date of filing: 17.09.2004
(51) Int. Cl.: B23Q 1/54, B23Q 1/34, B23Q 1/38, B25J 17/02, F16C 11/12, F16C 32/06

(54) **Parallel kinematics machine with elastic joints**

(71) Applicant: CSEM Centre Suisse d'Electronique et de Microtechnique SA, 2007 Neuchâtel (CH)
(72) Inventor: Codourey, Alain, 6055 Alpnach Dorf (CH); Sprenger, Bernhard, 6373 Ennetbürgen (CH)
(74) Representative: Müller, Markus Andreas

(57) **Abstract**

A high-precision positioning mechanism with at least three degrees of freedom comprises
at least one base member (6),
at least one effector member (5),
at least three linear actuators,
each actuator comprising a stationary element (1) and a movable element (2),
each stationary element (1) being rigidly attached to the base member (6),
and each movable element (2) being movably connected to the effector member (5) by means of an associated linking arrangement comprising one or more joints (4), where in each of the linking arrangements all the joints (4) are elastic joints.
The linear actuators are arranged at an angle of less than 30 degrees between adjacent linear actuators, or essentially parallel with respect to each other, and each of the linear actuators comprises means for maintaining an air gap between the stationary element (1) and the movable element (2).

As a result, a manipulator arrangement is obtained which exhibits both high precision and an extended workspace. The workspace may, in principle, be arbitrarily large in the direction of the parallel linear actuators.

## Description

### FIELD OF THE INVENTION

The invention relates to the field of positioning mechanisms, in particular to a high-precision positioning mechanism with at least three degrees of freedom as described in the preamble of claim 1.

### BACKGROUND OF THE INVENTION

Miniaturization of products is an ongoing trend worldwide thanks to the advances in the fields of micro- and nanotechnology. Thus, basic components become smaller and smaller. Their fabrication can usually not be realized in a single step and some assembly operations are required. The assembly of small components requires new robots with high-speed motion capability, i.e. with more than 3 cycles/second, with high precision, typically 100 nm repeatability, and preferably also having a large workspace.

In order to get high-speed motion capability, the moving mass has to be reduced to a minimum. This can be achieved by using parallel kinematics, since drive motors then remain fixed to a base ― in contrast to common serial robots. In order to improve precision, elastic or flexible joints may be used, although their range of motion is limited, when compared to ordinary joints consisting of separate rigid parts moving relative to one another. A parallel kinematics manipulator mechanism using elastic joints is described in *Hesselbach J. et al, "Design and Analyses of a Macro Parallel Robot with Flexure Hinges for Micro Assembly Tasks", ISR2004, Paris, March 2004.* However, the workspace of the arrangement remains limited due to the kinematic arrangement of the parallel links in conjunction with the limited range of motion of the flexure hinges.

A different solution for allowing high-speed motion combined with high precision is described in EP 0 317 787 A1. Here, an air bearing is used to obtain a friction-less motion in two linear dimensions of a plane. The drives are realised as voice-coil type motors, are arranged in two orthogonal directions and act in parallel onto the gliding plate. The possible motion remains however confined to the plane and is limited to a small area of several square centimeters. A longer, but only one-dimensional linear guide with an air bearing is disclosed in EP 1 143 489 A1.

A manipulator with a larger workspace, but lacking high precision and repeatability is presented in WO 97/22436 or US 6,099,217. This manipulator comprises six moving platforms in three linear guides. The guides are water-cooled in order to eliminate thermal expansion and to increase the positioning precision. Each platform is movably connected via a stiff strut to an effector plate. The effector plate has six degrees of freedom (DOF) and is positioned by moving the platforms along the linear guides. However, the attainable precision is far from what is required for the present purpose.

None of the abovementioned devices allows simultaneously high speed motion and high accuracy and a large workspace.

### DESCRIPTION OF THE INVENTION

It is therefore an object of the invention to create a high-precision positioning mechanism with at least three degrees of freedom of the type mentioned initially, which overcomes the disadvantages mentioned above.

These objects are achieved by a high-precision positioning mechanism with at least three degrees of freedom according to claim 1.

The high-precision positioning mechanism with at least three degrees of freedom comprises
at least one base member,
at least one effector member,
at least three linear actuators,
each actuator comprising a stationary element and a movable element,
each stationary element being rigidly attached to the base member,
and each movable element being movably connected to the effector member by means of an associated linking arrangement comprising one or more joints, where in each of the linking arrangements all the joints are elastic joints.

The linear actuators are arranged at an angle of less than 30 degrees between adjacent linear actuators, and each of the linear actuators comprises means for maintaining an air gap between the stationary element and the movable element.

As a result, a manipulator arrangement is obtained which exhibits both high precision and an extended workspace, as well as the capability of high speed motion. Since the linear actuators are arranged with small angles, i.e. less than a maximum angle of 30 degrees, or less than 20 or even 10 degrees, between them, the workspace is elongated in the direction of the linear actuators.

This small maximum angle holds for each pair of adjacent linear actuators. Thus, the angle between linear actuators that are not adjacent to each other may be larger. For a given linear actuator, an adjacent one is the one to which the angle is smallest. If there are several linear actuators at the same angle with respect to the given one, then these all are designated as adjacent actuators. Thus, for every one of the linear actuators, the angle between this linear actuator and the at least one adjacent one is smaller than said maximum angle. The angle between two, possibly skewed, straight lines in space is defined as being the angle between the two lines when viewing them in the direction that is normal to both of the lines.

In another preferred embodiment of the invention, the maximum angle between every pair of linear actuators is less than said maximum angle of 30, 20 or 10 degrees.

In a preferred embodiment of the invention the linear actuators are arranged for essentially parallel movement of the movable members with regard to each other. In this embodiment the workspace may, in principle, be arbitrarily large in the direction of the parallel linear actuators.

In general, flexible joints are based on the elastic deformation of the shape of a single piece of material. Plastic deformation is in principle allowable too, but will reduce the lifetime of a joint. Several joints may be combined in series or in parallel in order to achieve predetermined combined degrees of freedom.

Joints relying on an air film and elastic (or flexible) joints both exhibit extremely low friction, hysteresis and backlash and are both suited for high precision applications. However, air film joints (or air bearings) have a relatively large mass. This becomes critical in linkages comprising a serial arrangement of joints, as in the present case. Elastic joints, on the other hand, have only a relatively limited range of movement, but have a relatively small mass. The invention combines these two joint types in order to overcome the disadvantages of each type: Only the first joint in each sequence of parallel linkages is of the air film type, and is provided with driving means such as a linear motor. In consequence, moving masses are concentrated at the beginning of each parallel linkage. The remaining links are elastic, and are not actuated, i.e. passive. They consequently contribute only little to the overall mass being moved around. This is only possible since the kinematic configuration of the manipulator is a parallel one. The limitation of flexible joints, i.e. a small resulting workspace, is overcome by the fact that the first joints in each of the parallel linkages are linear joints running in parallel or at a small angle with respect to one another, allowing for large displacements.

Since the mass being moved around is reduced and concentrated at the basis of the kinematic chain, speed and precision are improved. Furthermore, the mechanical coupling between separate linking arrangements is reduced to a point where it may be neglected. This greatly simplifies the motion control system, since it allows the design of separate, noninteracting control loops for the linking arrangements.

Each linking arrangement constrains relative motion between the corresponding movable element and the effector member. The type of constraint is selected according to the degrees of freedom the effector member is to exhibit. The number and type(s) of degrees of freedom are also determined by the number of linear actuators and their geometric arrangement relative to one another.

In a preferred embodiment of the invention, for each of the linear actuators, the means for maintaining an air gap comprise magnets arranged to pull the stationary element and the movable element towards each other, and air injection means arranged to blow air into a space between the stationary and the movable element, thus driving them away from each other. The air injection means may be arranged as part of the stationary element and/or as part of the movable element. Similarly, the magnets may be arranged in the stationary element and corresponding iron cores in the movable element, or vice versa. In another embodiment, the preloading force is generated by a vacuum zone or by an electromagnet. Such an electromagnet may also serve as a brake.

In a further preferred embodiment of the invention, the space between the two elements is defined by at least two prismatic or cylindrical surfaces extending in parallel to the axis of displacement of the linear drive, and with surface normals pointing in substantially different directions, preferably at a right angle with respect to one another. The shape of the stationary and the movable element corresponds to said surfaces, but is slightly larger or smaller, respectively, according to the size of the desired air gap. Movement between the stationary and the movable element is thus constrained to a single linear dimension.

In a further preferred embodiment of the invention, the effector member is configured to move outside a volume characterised by the convex hull defined by the linear actuators. This embodiment, for example, comprises the case in which all the linear actuators are arranged in a single plane, and the effector member, obviously, moves in a volume of space outside said plane.

In another preferred embodiment of the invention, the effector member is configured to move inside a volume characterised by the convex hull defined the linear actuators. For example, three linear actuators may be arranged in parallel, defining the edges of a triangular cylinder, with the effector member moving inside said cylinder.

It is, in principle, also possible to realise an embodiment in which the effector member can move both within and outside the volume as described in the two previous embodiments.

In a further preferred embodiment of the invention, the means for maintaining the air gap are realised as an electromagnetic bearing, i.e. by controlling electromagnets in the stationary and/or the movable element in order to maintain a predetermined distance and avoiding physical contact.

The inventive positioning mechanism is particularly suited for use in the field of microassembly and for die bonding machines.

Further preferred embodiments are evident from the dependent patent claims.

### BRIEF DESCRIPTION OF THE DRAWINGS

The subject matter of the invention will be explained in more detail in the following text with reference to preferred exemplary embodiments which are illustrated in the attached drawings, which schematically show:
- Figure 1: a first preferred embodiment of a positioning mechanism according to the invention;
- Figure 2: a detail view of Figure 1;
- Figure 3: two views of an elastic joint used in said embodiment;
- Figure 4: an alternative elastic joint;
- Figure 5: different views of a linear joint comprising an air bearing;
- Figure 6: different views of a movable element of said linear joint; and
- Figures 7 and 8: further preferred embodiments of positioning mechanisms according to the invention.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

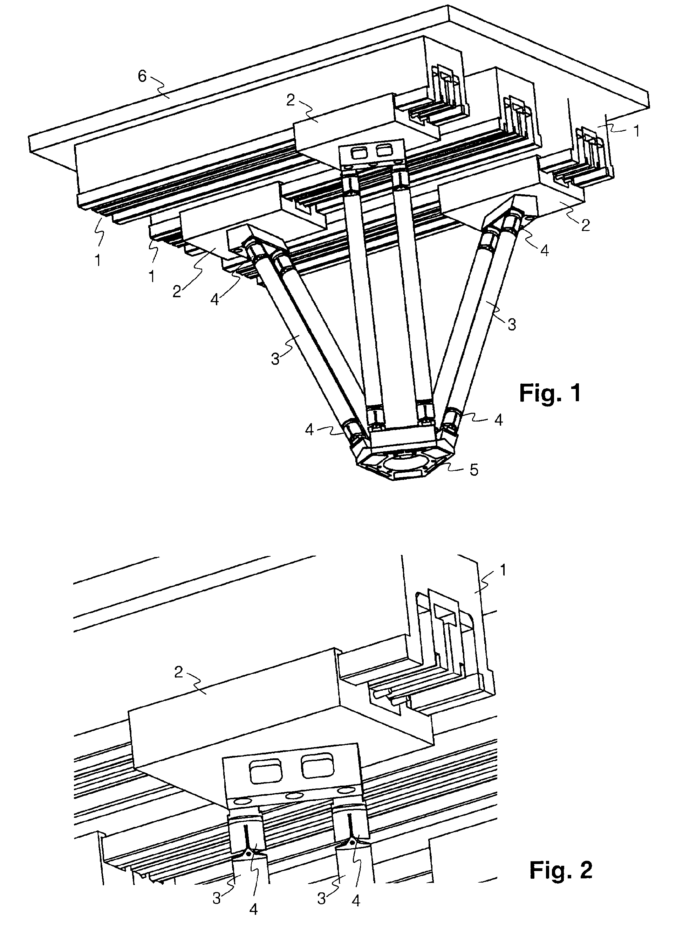

Figure 1 schematically shows the construction of a first embodiment of a positioning mechanism according to the invention. In this configuration three linear guides 1 are affixed to a base member 6 and arranged such that they define three parallel lines. One linear slide 2 each is placed along each of the 3 linear guides. An air gap or air film is established between the linear guides 1 and associated slides 2, so there is no mechanical contact between them. The slides 2 are preferably actuated by linear motors. The motion of each of the moving slides 2 is transmitted to the end-effector 5 through one or more rigid connecting elements such as links or rods 3 connected between the moving slides 2 and the end-effector 5 by flexible joints 4. The flexible joints 4 are arranged either serially or in parallel, depending on the degrees of freedom of the joints and on the total number of degrees of freedom desired for the end-effector 5. This allows a transmission of the motion from the linear motors 1,2 to the end-effector 5 without friction and backlash, thus leading to a very precise motion of the end-effector 5.

In the embodiment shown in Figure 1, two rods 3, each having flexible joints 4 at each end, form a linking arrangement between one of the linear slides 2 and the end effector 5. Here, the two rods 3 are of the same length and constitute two sides of a parallelogram and establish a parallelogram linkage. The two rods 3 each are attached, at a first end and by a first elastic joint 4, to the corresponding movable element 2, and, at a second end and by a second elastic joint 4, to the effector member 5. The two rods 3 always run parallel to one another, and so do the other two sides of the parallelogram, which are part of the end effector 5 and of the corresponding slide 2, respectively. The latter part is shown enlarged in Figure 2 which is a detail view of Figure 1. Three such parallelogram linkages or linking arrangements connect the three slides 2 to the end effector 5. As a result, the end effector 5 has three linear degrees of freedom.

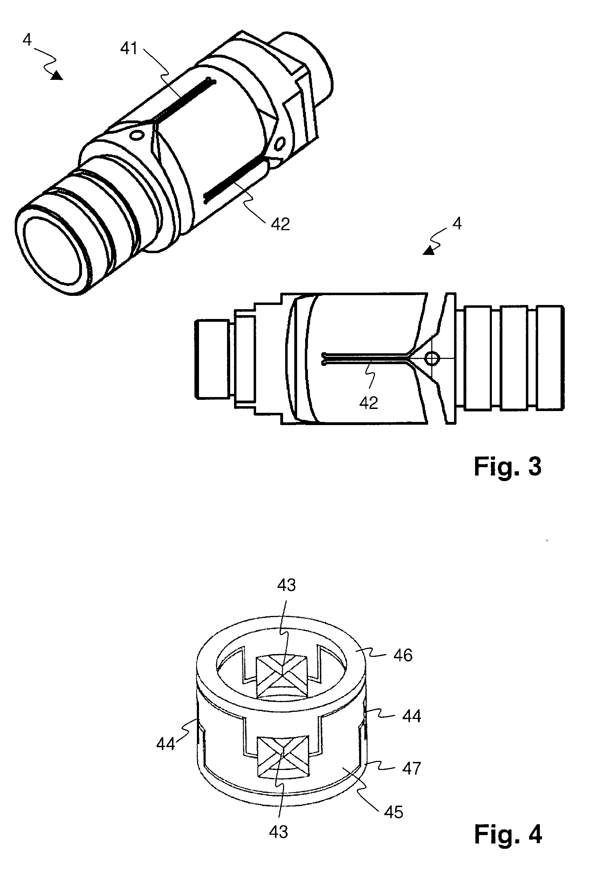

Figure 3 shows two views of an elastic joint 4 used preferably in the embodiment of figure 1. It is machined such that two very thin planar and flexible lamellas 41, 42 orthogonal to each other are created. The first lamella 41 joins a first end piece to an intermediate part, and the second lamella 42 joins the intermediate part to a second end piece. The elastic deformation of the lamellas 41, 42 provides the two orthogonal rotations. Thus, said elastic joints are configured as hinges allowing movement around two axes, which two axes are essentially perpendicular to each other and to a longitudinal axis extending from the first to the second elastic joint of a rod 3. This type of joint is also called a U-joint or cardan type flexible joint. Around each axis, a movement from e.g. -10° to +10° up to -20° to +20° is possible.

Figure 4 shows an alternative elastic joint, in which an intermediate ring 45 is flexibly connected to a first ring 46 by means of a first pair of coaxial joints 43. Each of these joints 43 comprises two intersecting thin, planar lamellas and allows movement around an axis defined by the intersection line of said lamellas. A second ring 47 is elastically connected to the intermediate ring 45 by means of a second pair of joints 44, whose common axis is orthogonal to the axis of the first pair of joints 43.

Another type of elastic joint is described in the previously mentioned paper by *Hesselbach J. et al.* Flexible joints with more degrees of freedom are implemented e.g. by means of a serial arrangement of flexible elements, each of which allows well-defined movement with a single degree of freedom. Such elements and serial arrangements are disclosed e.g. in EP 1 402 992 A1.

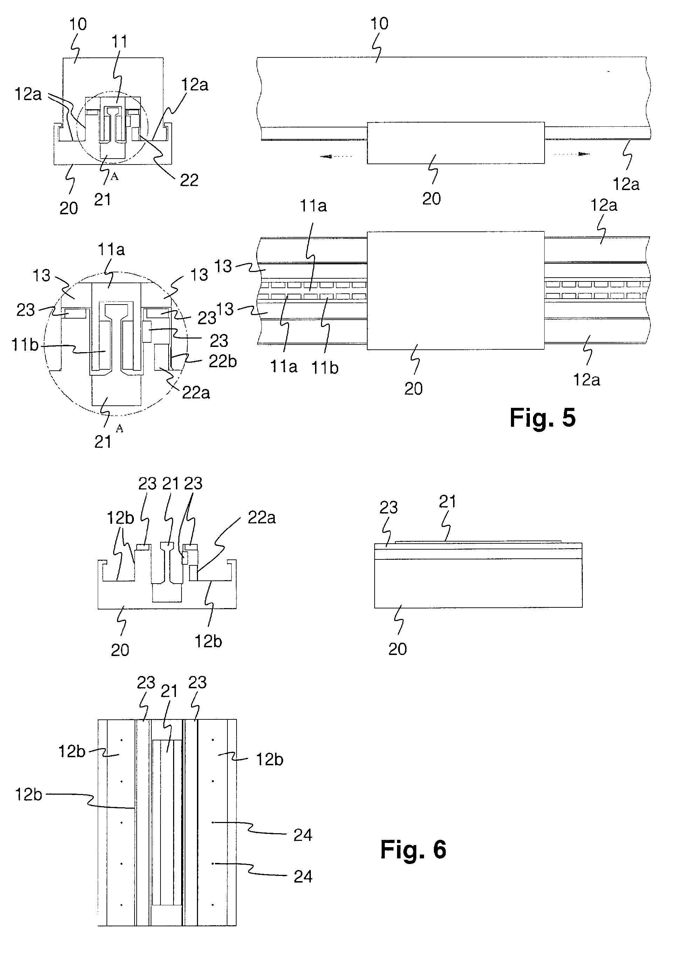

Figure 5 shows a cross-sectional view, an enlargement of a portion of said view, a lateral view and a bottom view of a preferred embodiment of a linear joint comprising an air bearing. Figure 6 shows a cross sectional view, a side view and a top view of a movable element or slide body 20 of said linear joint. The linear joint is constructed as follows:

The linear actuator comprises a linear guide 1, usually rigidly connected to a base member 6 (not shown), and a slide 2 which is guided along the linear guide and is suspended by an air film without mechanical contact to the linear guide 1. In particular, the slide comprises a slide body 20 which is guided by three pairs of corresponding guidance surfaces 12a, 12b separated by air films. Three guidance surfaces 12a are part of the guidance beam 10 and three guidance surfaces 12b are part of the slide body 20. Pressurised air is delivered into the bearings by small nozzles 24 integrated in the guidance surfaces 12b of the slide 2. The air-bearings are preloaded by magnets 23 that exert a force such that the slide 20 is pulled against the iron rails 13 integrated into the linear guide 1 for a z-direction preload, and towards the iron core 11a for an y-direction preload.

Alternative embodiments of the air bearing establish a preload force by pressurised air-bearings, by vacuum zones, by magnets, by solenoids or by any combination of these.

The linear actuator preferably comprises a linear motor comprising a stator 11 as part of the linear guide and a set of coils 21 as part of the slide 2. The windings of the coils lie in a plane that is normal to the paper plane of the figure. The stator 11 itself comprises permanent magnets 11b and an iron core 11a. The measurement of the slide position relative to the guidance beam 10 is preferably accomplished by a linear optical encoder 22 comprising a readout head 22a and a scale 22b.

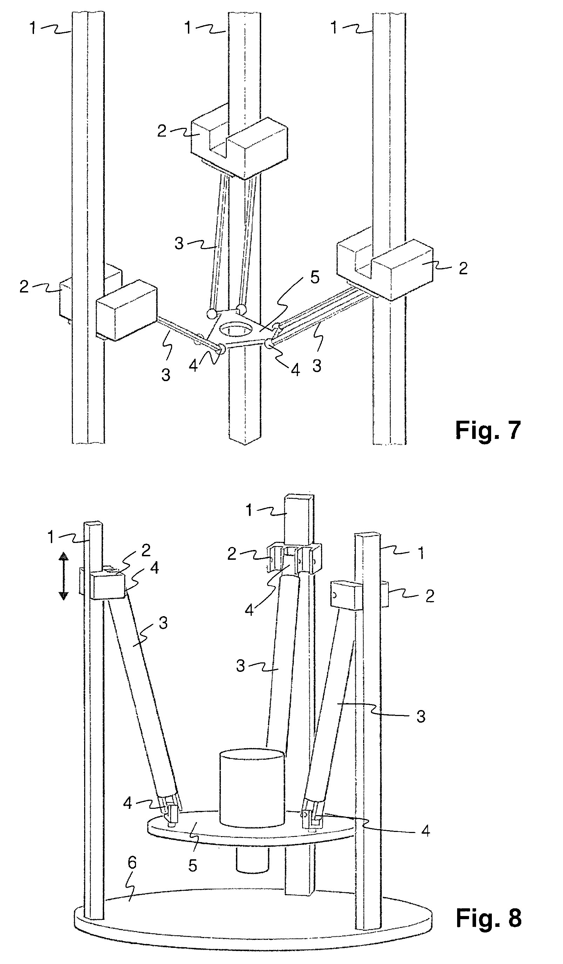

Figures 7 and 8 show kinematic arrangements according to further preferred embodiments of positioning mechanisms according to the invention. In the embodiments shown so far, the end effector 5 is arranged to move *outside* a convex hull defined by the linear guides 1. In contrast, according to Figure 7, the end effector 5 is arranged to move *inside* a convex hull defined by the linear guides 1. The linear guides are arranged in parallel, and when projected on a plane perpendicular to the guides, they form a triangle, e.g. an equilateral triangle. The linking arrangements, e.g. parallelogram arrangements as described above, rods 3, are directed from their corresponding slides 2 towards an interior zone of the volume spanned by the linear guides. This structure also results in three translational or linear degrees of freedom of the end effector 5.

In the embodiment according to Figure 8, the linear guides are arranged as in that of figure 7, but the linking arrangements are different: The links between the slides 2 and three associated single rods 3 have a single rotational degree of freedom around an axis perpendicular to the direction of the corresponding guide rail 1, and also perpendicular to a radial direction of the arrangement. The links between the rods 3 and the end effector 5 have two rotational degrees of freedom each. The two axes of these rotational links lie in a horizontal plane, which plane is perpendicular to the direction of the linear guides 2. Preferably, a first of said axes runs along a radial direction, i.e. from the centre of the triangle formed by the linear guides to the respective guide, and a second axis is perpendicular to the first one. As a result, the number of degrees-of-freedom of the platform is again three, but is constituted by a translation along a vertical axis (i.e. along the linear guides) and two rotations about axes in the horizontal plane. Thus, the effector member 5 has one linear and two rotary degrees of freedom.

In a further preferred embodiment of the invention, the effector has more than three degrees of freedom, and a corresponding number of linear actuators. The flexible joints also provide more than two degrees of freedom each. In particular, the number of degrees-of-freedom can be augmented to 6 by using the Hexaglide configuration for the parallel mechanism as shown in the initially mentioned reference WO 97/22436 or US 6,099,217. This embodiment comprises six linear actuators, and each linking arrangement comprises a single link, each link being attached at a first end and by a first elastic joint, to the corresponding movable element, and, at a second end and by a second elastic joint, to the effector member. Each of said elastic joints allows for two or three rotary degrees of freedom (DOF). The joints at the two ends of the same link 3 together have a total of at least five degrees of freedom. That is, one of the two links has three DOF, and the other has at least two DOF.

The invention allows to realise a high-speed, high-precision mechanism that finds applications in fast "pick&place" motion, die-bonding and/or microassembly, i.e. in the assembly of small components, typically smaller than 5 mm, with high precision, typically about 100 nm (nanometers), and with high speed, i.e. typically more than three pick&place operations per second. Depending on its configuration, the effector 5 can have between two and six degrees of freedom.

While the invention has been described in present preferred embodiments of the invention, it is distinctly understood that the invention is not limited thereto, but may be otherwise variously embodied and practised within the scope of the claims.

### LIST OF DESIGNATIONS

- 1: linear guide
- 2: linear slide
- 3: link
- 4: elastic joint
- 5: end effector
- 6: base member
- 10: guidance beam
- 11: stator
- 11a: iron core
- 11b: permanent magnets
- 12a: stationary guidance rails
- 12b: moving guidance elements
- 13: iron rail
- 20: slide body
- 21: coil
- 22: optical encoder
- 22a: optical encoder readout head
- 22b: optical encoder ruler
- 23: magnets
- 24: nozzles
- 41, 42: first and second lamella

## Claims

1. A high-precision positioning mechanism with at least three degrees of freedom, comprising
at least one base member (6),
at least one effector member (5),
at least three linear actuators,
each actuator comprising a stationary element (1) and a movable element (2),
each stationary element (1) being rigidly attached to the base member (6),
and each movable element (2) being movably connected to the effector member (5) by means of an associated linking arrangement comprising one or more joints (4), and in that in each of the linking arrangements all the joints (4) are elastic joints,
**characterised in that** the linear actuators are arranged at an angle of less than 30 degrees between adjacent linear actuators, and that each of the linear actuators comprises means for maintaining an air gap between the stationary element (1) and the movable element (2).

2. The positioning mechanism of claim 1, **characterised in that** the linear actuators are arranged essentially parallel with respect to each other.

3. The positioning mechanism of claim 1 or 2, **characterised in that**, for each of the linear actuators (2), the means for maintaining an air gap comprise magnets (23) arranged to pull the stationary element (1) and the movable element (2) towards each other, and air injection means (24) arranged to blow air into a space between the stationary and the movable element, thus driving them away from each other.

4. The positioning mechanism of one of the preceding claims, **characterised in that** each linking arrangement comprises a parallelogram linkage.

5. The positioning mechanism of claim 4, **characterised in that** two opposing links (3) of said parallelogram linkage each are attached, at a first end and by a first elastic joint (4), to the corresponding movable element (2), and, at a second end and by a second elastic joint (4), to the effector member (5).

6. The positioning mechanism of one of the preceding claims, **characterised in that**, for each of the opposing links, said elastic joints (4) are configured to allow movement around at least two axes, which two axes are essentially perpendicular to each other and to a longitudinal axis extending from the first to the second elastic joint (4).

7. The positioning mechanism of claim 6, **characterised in that** the elastic joints (4) are U-joint type joints.

8. The positioning mechanism of one of the preceding claims, **characterised in that** it comprises three linear actuators.

9. The positioning mechanism of claim 8, **characterised in that** the effector member (5) has three linear degrees of freedom.

10. The positioning mechanism of claim 9, **characterised in that** the effector member (5) has one linear and two rotary degrees of freedom.

11. The positioning mechanism of claim 10, **characterised in that** the joint (4) between each movable element (2) and the corresponding link element (3) allows for one rotary degree of freedom, and the joint between each link element (3) and the effector member (5) allows for at least two rotary degrees of freedom.

12. The positioning mechanism of one of claims 1 to 3 **characterised in that** it comprises six linear actuators, **in that** that each linking arrangement comprises a single link (3), each link (3) being attached at a first end and by a first elastic joint (4), to the corresponding movable element (2), and, at a second end and by a second elastic joint, to the effector member (5), and **in that** said elastic joints (4) together comprise at least five rotary degrees of freedom.

13. The positioning mechanism of one of the preceding claims, **characterised in that** the effector member (5) is configured to move inside a volume defined by a convex hull of the linear actuators.

14. The positioning mechanism of one of claims 1 to 12, **characterised in that** the effector member (5) is configured to move outside a volume defined by a convex hull of the linear actuators.
